# EUROPÄISCHE PATENTSCHRIFT

(11) **EP 1 401 652 B1**
(45) Veröffentlichungstag und Bekanntmachung des Hinweises auf die Patenterteilung: **15.12.2004**
(21) Anmeldenummer: 02780762.7
(22) Anmeldetag: 12.06.2002
(51) Int. Cl.: B32B 27/08

(54) **HOCHFREQUENZ(HF)-SCHWEISSBARE ELASTOMERZUSAMMENSETZUNG**
DIELECTRIC RESPONSE ELASTOMER-COMPOSITION
COMPOSITION ELASTOMERE A REPONSE DIELECTRIQUE

(30) Priorität: 18.06.2001 DE 10129278
(43) Veröffentlichungstag der Anmeldung: 31.03.2004
(73) Patentinhaber: C. Cramer, Weberei, Heek-Nienborg, GmbH & Co. KG, D-48619 Heek-Nienborg (DE)
(72) Erfinder: EISELE, Michael, 46397 Bocholt-Barlo (DE)
(74) Vertreter: Mentzel, Norbert, Dipl.-Phys.
(86) Internationale Anmeldenummer: PCT/EP2002/006415
(87) Internationale Veröffentlichungsnummer: WO 2002/103711

(56) Entgegenhaltungen:
- EP-A- 0 688 821
- EP-A- 0 878 504
- DE-U- 29 606 487
- PATENT ABSTRACTS OF JAPAN vol. 009, no. 025 (M-355), 2. Februar 1985 (1985-02-02) & JP 59 171614 A (MITSUBISHI YUKA KK), 28. September 1984 (1984-09-28)
- DATABASE WPI Section Ch, Week 199313 Derwent Publications Ltd., London, GB; Class A18, AN 1993-104434 XP002048458 & JP 05 043770 A (JAPAN SYNTHETIC RUBBER CO LTD), 23. Februar 1993 (1993-02-23)

## Beschreibung

Die Erfindung betrifft eine dielektrisch ansprechbare Elastomer-Zusammensetzung und die Verwendung dieser Zusammensetzung zur Herstellung eines Laminates und eines Verbundes sowie die Verwendung eines solchen Verbundes.

Elastomere finden aufgrund ihrer guten mechanischen Eigenschaften (Elastizität, Knicksteifigkeit) breite Verwendung in Laminaten, beispielsweise für Verdeckstoffe. In der Regel sind solche Laminate aus dem Obergewebe, einer aus der Lösung hergestellten Gummierung als Zwischenschicht und einem Untergewebe aufgebaut. Eine Verbindung von solchen Laminaten erfolgt bevorzugt durch Schweißen mittels eines Hochfrequenzen-Wechselstromfeldes (HF-Schweißen). Zwischen zwei Laminatlagen wird eine Schweißfolie angeordnet und von außen je eine Elektrode herangeführt. Die Frequenz des Wechselstromfeldes wird solange verändert, bis ein Wert erreicht wird, bei dem die Schweißfolie schmilzt und eine Verbindung der Laminate bewirkt. Im Gegensatz zum Ober- und Untergewebe spricht die elastomere Zwischenschicht der Laminate nicht auf das HF-Feld an. Das Elastomer stellt in nachteiliger Weise einen Isolator dar, der dazu führt, dass sich um die jeweiligen Elektroden beim HF-Schweißen ein großes induktives Feld aufbaut. Befinden sich nun Spuren von Feuchtigkeit, Salzkristalle oder andere leitfähige Substanzen auf der Gewebeoberfläche des Laminats, kommt es an diesen Stellen zu Durchbrennungen des Gewebes und der Verbund ist nicht mehr brauchbar. Da bereits die eingesetzten Laminate ein teures Produkt darstellen, ist eine hohe Ausschussrate beim HF-Schweißen besonders nachteilig.

Bekannt sind aus der US 5,456,976 Laminate, die statt einer Elastomerschicht eine Polyurethanschicht (PU) aufweisen. Die PU-Komponente kann aufgrund ihrer ambivalenten Gruppen durch elektromagnetische Felder gut angeregt werden. Diese Laminate weisen jedoch z.B. für Cabrioverdecke nicht die optimalen mechanischen Eigenschaften auf. Die Schrift US 5,456,976 geht auch nicht auf die Schweißbarkeit der dort beschriebenen Laminate ein.

EP 0 688 821 offenbart elastomer Polyolefinzusammensetzungen, die dielektrisch ausprechbare Polymer partikel enthalten.

Aufgabe der Erfindung ist es, eine dielektrisch ansprechbare Elastomer-Zusammensetzung zur Verfügung zu stellen, wobei die guten mechanischen Eigenschaften des Elastomers beibehalten werden.

Die Lösung der Aufgabe erfolgt erfindungsgemäß durch eine Elastomer-Zusammensetzung, bei der kleine Partikel eines Thermoplasten homogen verteilt in einem echten Elastomeren vorliegen. Die Teilchengröße der Partikel sollte dabei vorteilhafterweise 80 µm nicht überschreiten und vorzugsweise bei 30 bis 50 µm liegen. Je einheitlicher die Korngröße der Partikel, desto gleichmäßiger erfolgt die Beeinflussung der Elastomer-Zusammensetzung durch ein dielektrisches Feld. Der Anteil an Thermoplast-Partikel in der Elastomer-Zusammensetzung sollte kleiner 20 Gew.% gewählt werden. Ab 3 Gew.% ist ein merkliches Ansprechverhalten der Elastomer-Zusammensetzung auf dielektrische Felder nachweisbar. Ab 15 Gew.% verliert die Elastomer-Zusammensetzung spürbar ihren elastischen Charakter.

Die Auswahl des Thermoplasten richtet sich nach dem jeweiligen Anwendungszweck der erfindungsgemäßen Elastomer-Zusammensetzung. Generell sind Partikel von allen Thermoplasten einsetzbar, wie beispielsweise Ethylenvinylacetat, Polyethylene, Co-Polyamide, Co-Polyester oder auch thermoplastische Elastomere, z.B. Polyurethane. Anwendung finden, sowohl aliphatische als auch aromatische Polyurethane. Ebenso sind Gemenge von verschiedenen Thermoplasten mit kristallinen und/oder amorphen-Anteilen verwendbar.

Laminate mit der erfindungsgemäßen dielektrisch ansprechbaren Elastomer-Zusammensetzung als Zwischenschicht lassen sich hervorragend durch HF-Schweißen verbinden. Die Partikel des Thermoplasten in der Zwischenschicht beider Laminate sind in der Lage beim HF-Schweißen einen Teil der Energie des HF-Wechselstromfeldes zu absorbieren. Die Menge der absorbierten Energie ist über den Anteil an amorphen bzw. kristallinen Partikeln des Thermoplasten steuerbar. Je höher der Anteil an kristallinen Partikeln ist, desto mehr Energie kann von den Thermoplast-Partikeln aufgenommen werden.

Die Elastomer-Schicht zwischen Ober- und Untergewebe des Laminats wirkt aufgrund der Thermoplast-Partikel nicht mehr wie eine Isolierschicht. Dadurch baut sich nunmehr kein breites induktives Feld um die HF-Schweißelektroden auf. Ein solches Laminat verhält sich also wesentlich positiver, als ein Laminat, welches nur ein Elastomer als Zwischenschicht besitzt. Andererseits weist ein Laminat mit der erfindungsgemäßen Elastomer-Zusammensetzung gute mechanische Eigenschaften, z.B. hohe Elastizität und Knicksteifigkeit auf.

Ein weiterer Vorteil der Erfindung ist das gute Aussehen der Schweißnaht. Durch die Form der Elektrode und insbesondere die Taktfrequenz beim HF-Schweißen lässt sich eine dekorative Ziernaht erzeugen.

Als Elastomer können alle bekannten Kautschuke, vorzugsweise Chloropren, FluorKautschuk, Nitrilbutadien-Kautschuk oder Butylkautschuk sowie Silikon eingesetzt werden. Bevorzugte Thermoplast-Partikel, sind Partikel von aliphatischen Polyurethanen, aromatischen Polyurethanen, Polyethylenen, Co-Polyamiden, Co-Polyester oder Ethylenvinylacetate. Die Zwischenschicht eines Laminats kann in der Elastomer-Zusammensetzung zusätzlich Füllstoffe, Haftvermittler, Farbpigmente, UV-Absorber, Vernetzer, Stabilisatoren, Weichmacher oder andere Substanzen als Additive enthalten.

Ein Verbund aus Laminaten mit einer dielektrisch anregbaren Zwischenschicht kann für Verdeckstoffe bei Cabriodächern eingesetzt werden, wobei vorteilhafterweise bei der Herstellung des Verbundes auch Glasfenster in das Cabrioverdeck eingeschweißt werden können.

Cabrioverdeckstoffe werden extremen Wärmeauslagerungstests unterzogen, wobei sie 500 Stunden einer Temperatur von 105°C standhalten müssen, ohne dass sich ihre mechanischen Eigenschaften wesentlich verändern. Nach Auswahl eines geeigneten Thermoplasten für die Elastomer-Zusammensetzung, beispielsweise eine Polyurethan-Komponente (hochkristallines, aromatisches Polyurethan vom Ethertyp), die einen Erweichungsbereich aufweist, der über 120°C beginnt, sind Laminate und damit Verdeckstoffe herstellbar, die die oben genannten Anforderungen erfüllen.

Für andere Anwendungsfälle, wie beispielsweise Luftschiffe, wählt man vorteilhafterweise eine aliphatische Polyurethan-Komponente, die sich durch hohe Licht- und Wetterbeständigkeit auszeichnet.

In den Figuren ist ein Ausführungsbeispiel im Vergleich zum bisher bekannten Stand der Technik dargestellt. Es zeigen:
- Fig. 1: eine schematische Darstellung der Verbindung von zwei Laminaten nach dem Stand der Technik und
- Fig. 2: eine schematische Darstellung der Verbindung von zwei erfindungsgemäßen Laminaten.

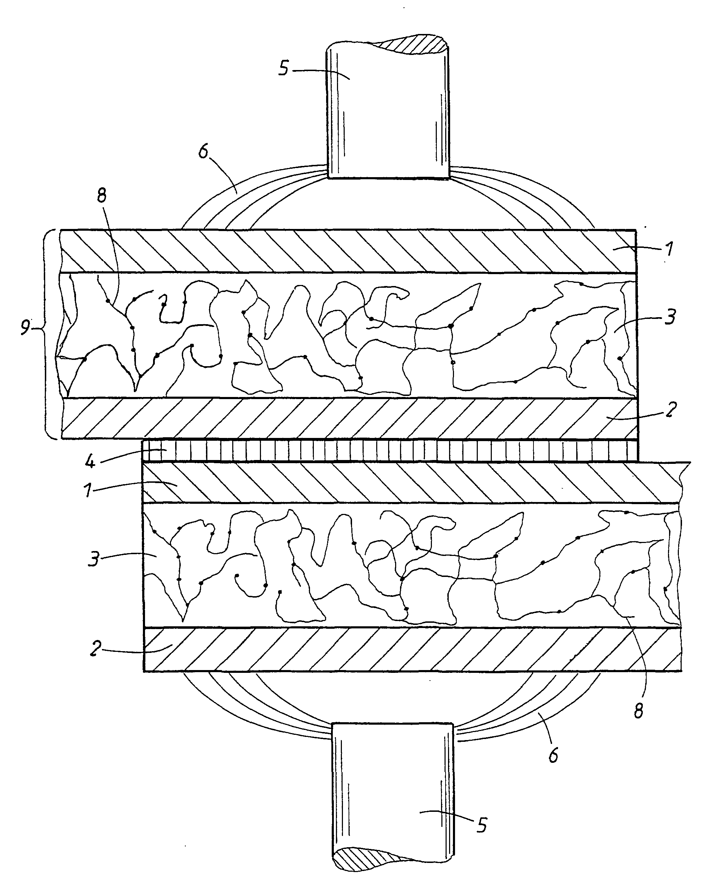

In Fig. 1 sind zwei Laminate 9 gemäß dem Stand der Technik dargestellt. Sie bestehen jeweils aus Obergewebe 1, Untergewebe 2 und einer Zwischenschicht 3. Diese Laminate 9 sollen durch HF-Schweißen zu einem Verdeckstoff für Cabriodächer verbunden werden. Das Obergewebe 1 besteht aus einem Polyacrylnitril, das Untergewebe 2 aus einem Polyester. Die Zwischenschicht 3, die auch als Gummierung bezeichnet wird, wird von einem Elastomer 8 gebildet. Das weit vernetzte System des Elastomers 8 ist in der schematischen Darstellung der Fig. 1 angedeutet. Dieses Elastomer 8, z.B. Chloropren, stellt eine Isolierschicht dar. Zwischen beiden Laminaten 9 ist eine Schweißfolie 4 angeordnet. Diese bekannte Schweißfolie 4 besteht in diesem Fall aus PVC und einem Verstärkungsband. PVC ist bestens durch ein elektromagnetisches Feld anregbar und unterstützt damit die Verbindungsbildung beim Schweißen. Von oben und unten wird je eine Schweißelektrode 5 herangeführt und eine hochfrequente (HF) Wechselspannung angelegt. Während des Schweißens wird die Frequenz solange verändert, d.h. erhöht, bis die Energie ausreicht, die Folie zu schmelzen. Zwischen den Elektroden und den Laminaten 9 baut sich dabei ein großes induktives Feld 6 auf, weil aufgrund der zwei durch das Elastomer 8 gebildeten Isolierschichten kein ungehinderter Stromfluss stattfinden kann.

Die hohen Feldspannungen und das breite Feld 6 führen in nachteiliger Weise dazu, dass Schweißspuren oder Salzkristalle, die sich zwar nicht im Bereich der Fügestelle, aber in dessen Nähe befinden, von der Energie des Feldes 6 angeregt und aufgrund ihrer hohen Leitfähigkeit zu Durchbrennungen auf der Oberfläche des Laminats 9 führen.

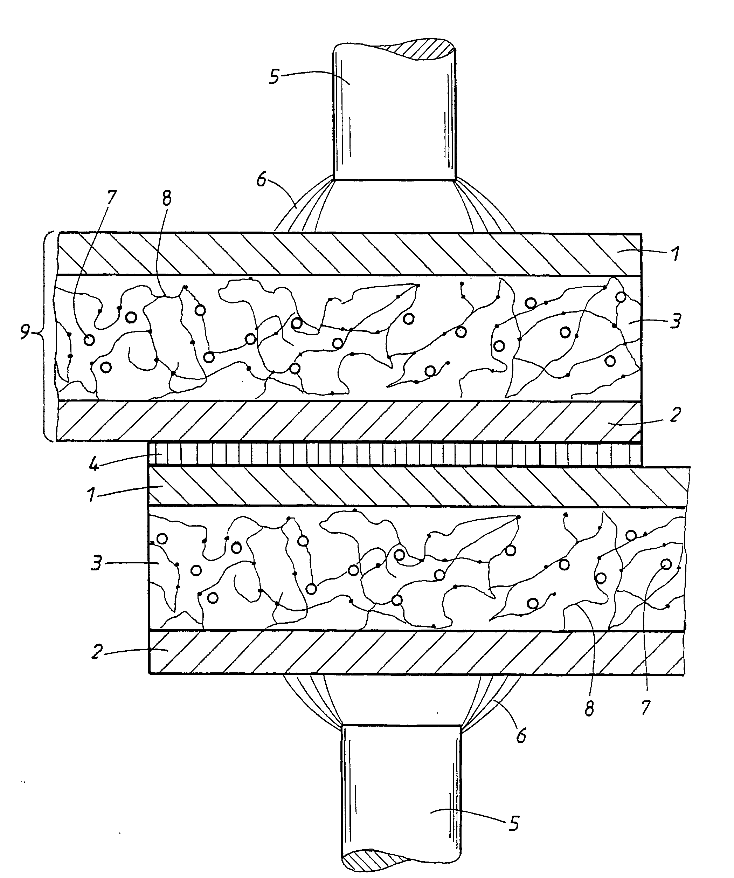

Vergleicht man nun dazu die erfindungsgemäße Anordnung gemäß Fig. 2, so wird deutlich, dass hier nur ein sehr kleines induktives Feld 6 aufgebaut wird. Dargestellt sind ebenfalls zwei Laminate 9 bestehend aus Obergewebe 1, Untergewebe 2 und Zwischenschicht 3, wobei die HF-Schweißung unter Zwischenlegung einer Schweißfolie 4 erfolgt. Als Obergewebe 1 ist ebenfalls ein Polyacrylnitril und als Untergewebe 2 ein Polyester gewählt. Auch die Schweißfolie 4 ist vergleichbar mit dem Stand der Technik und besteht aus PVC und einem Verstärkungsband. Die Zwischenschicht 3 ist aus der erfindungsgemäßen Zusammensetzung aufgebaut, nämlich aus Thermoplastkörnern 7, homogen verteilt in dem Elastomer 8. Das weit maschige Netz des Elastomer 8 ist von Chloropren gebildet und als Thermoplastkörner 7 sind 7 Gew.% einer aromatischen Polyurethan-Komponente des Ethertyps eingesetzt. Die gewählten Polyurethan-Partikel sind hochkristallin, haben eine Korngröße von 30 bis 50 µm und erweichen in einem Schmelzbereich von 125 bis 140°C.

Werden nun die HF-Elektroden 5 herangeführt und ein hochfrequentes Wechselstromfeld angelegt, ist ein kleinerer induktiver Fluss notwendig, um die beiden Laminate 9 zu verbinden. Die PU-Partikel 7 werden durch das elektromagnetische Feld angeregt, absorbieren einen Teil der Energie des Feldes, wodurch sie sich erwärmen und ebenso ihre Umgebung. Beim Zusammendrücken der Elektroden 5 wird eine Verschweißung erzielt, wobei die äußere Schweißnaht ein exzellentes Nahtdesign aufweist. Die Einprägung von Ziernähten kann durch verschiedene Taktfrequenzen variiert werden.

Die erfindungsgemäßen Laminate erlauben eine HF-Schweißung mit sehr hohen Taktfrequenzen, was wiederum Einfluss auf die Wirtschaftlichkeit des Prozesses hat.

Der im oben beschriebenen Beispiel erzielte Verbund ist vorteilhafterweise als Verdeckstoff für Cabriodächer einsetzbar und besteht die extremen Wärmeauslagerungstests.

Die dargestellten und vorbeschriebenen Ausführungsformen einer dielektrisch anregbaren Elastomer-Zusammensetzung geben den Erfindungsgegenstand nur beispielsweise wieder, der keinesfalls auf diese Ausführungsform beschränkt ist. Es sind vielmehr noch weitere Ausgestaltungen und Ausführungsformen des Erfindungsgegenstandes denkbar.

### Bezugszeichenliste :

- 1: Obergewebe
- 2: Untergewebe
- 3: Zwischenschicht
- 4: Schweißfolie
- 5: HF-Elektrode
- 6: induktives Wechselstromfeld
- 7: Thermoplastkörner
- 8: Elastomer
- 9: Laminat

## Patentansprüche

1. Schweißbares, elastisches Laminat mit einer Zwischenschicht aus einem Gemenge an Chloropren und bis zu 20 Gew% Polyurethanpartikeln der Korngröße 30 - 50 µm wobei der Erweichungsbereich der Polyurethanpartikel bei 125°C - 140°C liegt.

2. Laminat nach Anspruch 1 **dadurch gekennzeichnet, dass** Partikel eines aliphatischen und/oder aromatischen Polyurethans eingesetzt sind.

3. Laminat nach Anspruch nach einem der Ansprüche 1 oder 2, **dadurch gekennzeichnet, dass** Partikel eines Polyurethans mit kristalliner und /oder amorpher Struktur eingesetzt sind.

4. Laminat nach Anspruch 1 bis 3, **dadurch gekennzeichnet, dass** die Polyurethanpartikel einen kleinen Erweichungsbereich von höchstens 20 Kelvin besitzen, vorzugsweise 15 Kelvin.

5. Verdeckstoff aus einem Laminat gemäß Anspruch 1 bis 4 mit einem Obergewebe aus Polyacrylnitril, mit einem Untergewebe aus Polyester und einer Zwischenschicht aus Chloropren mit Partikeln eines aromatischen Polyurethan des Ethertyps.

## Claims

1. Weldable elastic laminate having an intermediate layer of a mixture of chloroprene and up to 20 wt.% of polyurethane particles with a particle size of 30-50 µm, the softening range of the polyurethane particles being from 125°C to 140°C.

2. Laminate according to claim 1, **characterised in that** particles of an aliphatic and/or aromatic polyurethane are used.

3. Laminate according to one of claims 1 or 2, **characterised in that** particles of a polyurethane with a crystalline and/or amorphous structure are used.

4. Laminate according to claim 1, 2 or 3, **characterised in that** the polyurethane particles have a small softening range of at most 20 Kelvin, preferably 15 Kelvin.

5. Covering material comprising a laminate according to claims 1 to 4 having an upper fabric of polyacrylonitrile, a lower fabric of polyester and an intermediate layer of chloroprene with particles of an aromatic polyurethane of the ether type.

## Revendications

1. Stratifié élastique, soudable, avec une couche intermédiaire formée d'un mélange de chloroprène et de jusqu'à 20 % en poids de particules de polyuréthane de taille de grain de 30 à 50 µm, la zone de ramollissement des particules de polyuréthane étant dans la plage de 125°C à 140°C.

2. Stratifié selon la revendication 1, **caractérisé en ce que** des particules d'un polyuréthane aliphatique et/ou aromatique sont utilisées.

3. Stratifié selon l'une des revendications 1 ou 2, **caractérisé en ce que** des particules d'un polyuréthane ayant une structure cristalline et/ou amorphe sont utilisées.

4. Stratifié selon la revendication 1 à 3, **caractérisé en ce que** les particules de polyuréthane présentent une petite plage de ramollissement, maximale de 20 Kelvin, de préférence, de 15 Kelvin.

5. Matériau pour capote formé d'un stratifié selon les revendications 1 à 4, avec un tissu de dessus en polyacrylonitrile et un tissu de dessous en polyester, et une couche intermédiaire en chloroprène avec des particules d'un polyuréthane aromatique du type éther.
